# EUROPÄISCHE PATENTSCHRIFT

(11) **EP 2 482 980 B1**
(45) Veröffentlichungstag und Bekanntmachung des Hinweises auf die Patenterteilung: **11.09.2019**
(21) Anmeldenummer: 09748055.2
(22) Anmeldetag: 01.10.2009
(51) Int. Cl.: B01L 3/00, B01L 9/06, B01L 3/14, G01N 35/00

(54) **FLÜSSIGKEITS-ANALYSESYSTEM**
LIQUID ANALYSIS SYSTEM
SYSTÈME D'ANALYSE DE LIQUIDES

(43) Veröffentlichungstag der Anmeldung: 08.08.2012
(73) Patentinhaber: Hach Lange GmbH, 14163 Berlin (DE)
(72) Erfinder: RÜECK, Gabriel, 12207 Berlin (DE); GUTHMANN, Helga, 41516 Grevenbroich (DE); BERSSEN, Johannes, 16341 Panketal (DE); ZIEDRICH, Michael, 12355 Berlin (DE); SCHULZ, Carsten, 41542 Dormagen (DE); HANSCHKE, Clemens, 14167 Berlin (DE); ENGEL, Florens, 14532 Stahmsdorf (DE); ZANGENBERG, Dietmar, 40625 Düsseldorf (DE); LENHARD, Markus, 41751 Viersen (DE); COERPER, Thomas, 40472 Düsseldorf (DE)
(74) Vertreter: Patentanwälte ter Smitten Eberlein-Van Hoof Rütten Partnerschaftsgesellschaft mbB
(86) Internationale Anmeldenummer: PCT/EP2009/062777
(87) Internationale Veröffentlichungsnummer: WO 2011/038769

(56) Entgegenhaltungen:
- EP-A1- 2 020 263
- EP-A1- 2 080 553
- EP-A2- 1 767 948
- EP-A2- 2 068 155
- DE-A1- 4 109 118
- US-A1- 2005 205 673
- US-A1- 2009 124 015
- US-A1- 2009 130 745

## Beschreibung

Die Erfindung bezieht sich auf ein Flüssigkeits-Analysesystem zur fotometrischen Bestimmung eines Analyts in einer Flüssigkeitsprobe.

Ein derartiges System ist beispielsweise aus DE 41 09 118 C2 bekannt. Das Analysesystem wird von einem Analysegerät und Testküvetten gebildet, wobei mehrere Testküvetten einer Charge zusammengefasst in einer Küvettenverpackung zum Verbraucher beziehungsweise zum Analysegerät transportiert werden. Die Testküvetten sind jeweils mit einem Identifikator in Form eines eindimensionalen Barcodes versehen. Der Identifikator enthält Informationen über die Art des Küvettentests, also über das Analyt, das mit dem Küvettentest bestimmt werden kann, beziehungsweise über die Art des Reagenzes, das zu diesem Zweck in der Testküvette vorhanden ist. In dem Analysegerät ist ein Speicher mit einer Datenbank vorhanden, in der für verschiedene Küvettentest- bzw. Reagenz-Arten Reagenzdaten für die Messung und die Auswertung der Messung gespeichert sind. Reagenzdaten sind z.B. chargenspezifische Korrekturfaktoren, Haltbarkeitsinformationen etc., die jeweils manuell in das Analysegerät eingegeben werden müssen, da hierzu die Speicherkapazität des Barcodes nicht ausreicht.

Die manuelle Eingabe der Reagenzdaten ist fehlerträchtig und umständlich.

Aus US 2005/0205673 A1 ist ein Analysesystem zur Blutuntersuchung bekannt, wobei in einem Tray eine Vielzahl von Testküvetten angeordnet ist. Das Tray ist mit einem RFID-Parameter-Transponder ausgestattet, in dem umfangreiche Informationen über die Küvetten gespeichert sind.

EP 2 068 155 A offenbart ein Laboranalysegerät, das reagenzfreie Testküvetten in einem Küvettenmagazin und separate Reagenzcontainer mit RFID-Parameter-Transpondern aufweist.

Aufgabe der Erfindung ist es demgegenüber, ein Flüssigkeits-Analysesystem mit vereinfachter Handhabung und verringerter Fehlerträchtigkeit sowie ein Verfahren zum Betrieb eines derartigen Analysesystems zu schaffen. Diese Aufgabe wird erfindungsgemäß gelöst mit einem Flüssigkeits-Analysesystem gemäß Anspruch 1 und einem Verfahren zum Betrieb eines derartigen Analysesystems gemäß Anspruch 6. Das erfindungsgemäße Flüssigkeits-Analysesystem weist ein Analysegerät mit einer der RFID-Parameter-Lesevorrichtung und einer Identifikator-Lesevorrichtung auf. Die Küvettenverpackung ist mit einem RFID-Parameter-Transponder ausgestattet, wobei der RFID-Parameter-Transponder einen Chargenidentifikations-Speicher mit einer Chargenidentifikation und einen Parameterspeicher mit chargenspezifischen Reagenzdaten aufweist. Unter einer RFID-Lesevorrichtung und einem RFID-Transponder sind elektronische digitale Geräte zu verstehen, die drahtlos über Funk miteinander kommunizieren, und dabei Daten austauschen. Bei dem RFID-Transponder kann es sich um einen passiven oder um einen aktiven Transponder handeln, Der Chargenidentifikations-Speicher und der Parameterspeicher können physisch derselbe Speicher sein.

In der Küvettenverpackung sind mehrere Testküvetten einer Charge gelagert, wobei die Testküvetten jeweils dasselbe Reagenz enthalten, das mit dem zu bestimmenden Analyt farbverändernd reagiert. Unter einer Charge ist vorliegend eine Charge im engeren Sinne oder im weiteren Sinne zu verstehen, also eine Produkt- oder Produktionsserie, die bezüglich mindestens einer ihrer Reagenzdaten homogen ist. Als Reagenzdaten sind vorliegend insbesondere, jedoch nicht ausschließlich, Qualitätssicherungsdaten und/oder Haltbarkeitsdaten zu verstehen.

Jede Testküvette weist einen chargenspezifischen Identifikator mit einer Chargenidentifikation auf, der bzw. die von der Identifikator-Lesevorrichtung gelesen werden kann.

Die Identifizierung der in das Analysegerät eingesetzten Testküvette erfolgt durch Auslesen des chargenspezifischen Identifikators mit der Chargenidentifikation auf der Testküvette durch die Identifikator-Lesevorrichtung des Analysegeräts. Der Identifikator kann auf eine relativ geringe Informationsmenge begrenzt sein, wie dies beispielsweise bei eindimensionalen oder zweidimensionalen Barcodes unvermeidlich ist. In jedem Fall ist die auf einem Barcode speicherbare Informationsmenge zu gering, um chargenspezifische Reagenzdaten zu speichern. Aus der chargenspezifischen Identifikation ergibt sich sowohl die Zuordnung der Testküvette zu einer bestimmten Charge als auch die Art des Küvettentests, also das zu bestimmenden Analyt beziehungsweise das hierzu in der Testküvette vorgesehene Reagenz.

Die chargenspezifischen Reagenzdaten sind in dem RFID-Parameter-Transponder der Küvettenverpackung gespeichert, der von der RFID-Parameter-Lesevorrichtung des Analysegeräts angesprochen und ausgelesen werden kann. Auf diese Weise werden die Chargenidentifikation aus dem Chargenidentifikations-Speicher und die zugeordneten chargenspezifischen Reagenzdaten aus dem Parameterspeicher des RFID-Parameter-Transponders In entsprechende Speicher des Analysegeräts übertragen. Dies kann beispielsweise immer dann erfolgen, wenn eine neue Küvettenverpackung erstmals geöffnet wird, oder immer dann, wenn erstmals eine Testküvette mit einer dem Analysegerät unbekannten Chargenidentifikation in das Analysegerät eingesetzt und dies von dem Analysegerät optisch und/oder akustisch signalisiert wurde. Die chargenspezifischen Reagenzdaten müssen jedenfalls nicht mehr manuell in das Analysegerät eingegeben werden.

Als chargenspezifische Reagenzdaten können auf diese Weise Kalibrierungsdaten, Haltbarkeitsdaten, Herstellungsdaten und/oder Qualitätssicherungsdaten etc. übermittelt werden. Da ein RFID-Transponder sehr große Informationsmengen speichern kann, können dem Analysegerät auf diese Weise alle Informationen zur Verfügung gestellt werden, die für eine genaue, zuverlässige und umfassend dokumentierte Analyt-Bestimmung benötigt werden. Die Größe der Informationsmenge hat keinen negativen Einfluss auf die Handhabung des Analysesystems.

Da die chargenspezifischen Reagenzdaten nicht mehr manuell in das Analysegerät eingegeben werden, sondern automatisch an das Analysegerät übertragen werden, ist eine fehlerhafte Übertragung beziehungsweise Eingabe von Reagenzdaten praktisch ausgeschlossen.

Für eine ganze Küvettenverpackung gefüllt mit Testküvetten wird nur ein einziger RFID-Parameter-Transponder benötigt, Hierdurch sind die Mehrkosten für diese Maßnahme begrenzt. Dadurch, dass der RFID-Parameter-Transponder auf der Küvettenverpackung, nicht jedoch auf der Testküvette selbst angeordnet ist, ist der RFID-Transponder grundsätzlich auch keinen Chemikalien, keiner Feuchtigkeit und keiner Erwärmung in einem Ofen ausgesetzt, wie dies bei einem an der Testküvette fixierten RFID-Transponder nie ausgeschlossen werden kann. Wenn es sich um eine mehrfach verwendbare Küvettenverpackung handelt, kann der RFID-Parameter-Transponder durch wiederholte Neuprogrammierung ebenfalls mehrfach verwendet werden.

Die Programmierung des RFID-Parameter-Transponders kann bereits während der Herstellung der Küvettentests, also während der Befüllung der Testküvetten mit dem Reagenz erfolgen. Hierbei werden die Testküvetten mit einem chargenspezifischen Identifikator mit einer Chargenidentifikation versehen, der mit der Chargenidentifikation korrespondiert, die in den Chargenidentifikations-Speicher des RFID-Parameter-Transponders geschrieben wird. Die chargenspezifischen Reagenzdaten werden in dem Parameterspeicher des RFID-Parameter-Transponders der Küvettenverpackung abgespeichert, und werden dabei der korrespondierenden Chargenidentifikation zugeordnet. Die Testküvetten, die in die zugeordnete Küvettenverpackung verpackt werden, werden mit Identifikatoren versehen, die dieselbe Chargenidentifikation enthalten. Beispielsweise bei Anlieferung der Küvettenverpackung oder beim erstmaligen Öffnen der Küvettenverpackung beim Benutzer, oder bei Verwendung der ersten Testküvette aus der Küvettenverpackung für eine Flüssigkeitsproben-Analyse wird der RFID-Parameter-Transponder der Küvettenverpackung von der RFID-Parameter Lesevorrichtung des Analysegeräts ausgelesen, und werden die Chargenidentifikation sowie die korrespondierenden chargenspezifischen Kalibrierdaten in dem Analysegerät gespeichert. Das Analysegerät kann bevorzugt eine Vielzahl chargenspezifischer Kalibrierdaten speichern, so dass jederzeit Testküvetten für verschiedene Analyte und Testküvetten verschiedener Chargen eingesetzt werden können.

Zur Durchführung einer Analyse wird die Wasserprobe in die Testküvette eingegeben, mit dem Reagenz vermischt, die Testküvette gegebenenfalls erhitzt und schließlich in das Analysegerät eingesetzt. Die Identifikator-Lesevorrichtung des Analysegeräts liest den Identifikator mit der Chargenidentifikation der Testküvette aus, und führt anschließend eine fotometrische Bestimmung des Analyts in der Flüssigkeitsprobe durch. Die quantitative Bestimmung erfolgt mit Hilfe der chargenspezifischen Kalibrierdaten, die in dem Analysegerät zu dem eingelesenen Chargenidentifikator abgespeichert sind.

Die Identifikator-Lesevorrichtung ist eine von der RFID-Parameter-Lesevorrichtung separat und technisch verschieden ausgebildete Lesevorrichtung. Auf diese Weise können die beiden Lesevorrichtungen für ihre jeweilige Aufgabe technisch und kostenmäßig optimiert werden.

Besonders bevorzugt ist der Identifikator an den Testküvetten als optischer Barcode und ist die Identifikator-Lesevorrichtung als optische Barcode-Lesevorrichtung ausgebildet. Besonders bevorzugt ist der Barcode ein sogenannter 2D-Barcode, also ein zweidimensionaler optischer Code, der erheblich mehr Informationen wiedergeben kann, als ein eindimensionaler Barcode. Als zusätzliche Dimension des Barcodes kann auch noch Farbe benutzt werden.

Grundsätzlich kann der Identifikator an irgendeiner Stelle der Testküvette angebracht sein. Der Identifikator der Testküvette kann vor dem Einsetzen in das Analysegerät von der Identifikator-Lesevorrichtung gelesen werden. Vorzugsweise ist der Barcode jedoch außen auf der Testküvette angebracht, und ist die Barcode-Lesevorrichtung derart in dem Analysegerät angeordnet, dass der Barcode bei in das Analysegerät eingesetzter Testküvette gelesen werden kann. Hierdurch wird sichergestellt, dass der Identifikator tatsächlich zu der in das Analysegerät eingesetzten Testküvette gehört. Ferner wird durch eine derartige Anordnung ein automatisches Auslesen des Identifikators durch die Lesevorrichtung ermöglicht.

Gemäß einer bevorzugten Ausgestaltung weist das Analysegerät eine Testküvetten-Drehvorrichtung zum Drehen der eingesetzten Testküvette auf. Die Drehvorrichtung dreht die in das Analysegerät eingesetzte Testküvette um die Längsachse der Testküvette. Hiermit kann zum einen das Auffinden und Lesen des Testküvetten-Identifikators durch die Identifikator-Lesevorrichtung des Analysegeräts ermöglicht bzw. erleichtert werden. Ferner kann durch das Drehen der Testküvette während der Fotometrie eine Mehrfachmessung ermöglicht werden, wodurch Artefakte erkannt und ausgeschlossen werden können.

Gemäß dem nebengeordneten Anspruch 8 weist ein Verfahren zum Betrieb eines Analysegeräts eines Flüssigkeits-Analysesystems folgende Verfahrensschritte auf:
bei Vorliegen eines Auslesebefehls: Auslesen der Chargenidentifikation und der chargenspezifischen Reagenzdatenaus dem RFID- Parameter- Transponder, und Speicherung dieser Daten in einem Reagenzdaten-Speicher,
vor jeder Analytbestimmung: Auslesen des chargenspezifischen Identifikators der Testküvette mit der Identifikator-Lesevorrichtung, und
quantitative fotometrische Bestimmung des Analyten in der Flüssigkeitsprobe der Testküvette mit Hilfe der zugeordneten Reagenzdaten,

Der Auslesebefehl wird entweder manuell von dem Bediener in das Analysegerät eingegeben, oder aber wird automatisch ausgelöst, sobald eine unbekannte Chargenidentifikation von der Identifikator-Lesevorrichtung gelesen wurde oder der RFID-Parameter-Transponder in die Reichweite der RFID-Parameter-Lesevorrichtung kommt. Bei Vorliegen eines Auslesebefehls werden die chargenspezifischen Reagenzdaten von dem RFID-Parameter-Transponder in den Reagenzdaten-Speicher des Analysegeräts eingelesen.

Vor jeder Analytbestimmung wird der chargenspezifische Identifikator der Testküvette durch die Identifikator-Lesevorrichtung eingelesen, und wird die anschließende fotometrische quantitative Bestimmung des Analyts in der Flüssigkeitsprobe mit Hilfe der chargenspezifischen Reagenzdaten durchgeführt, die in dem Reagenzdaten-Speicher des Analysegeräts gespeichert sind.

Im Folgenden wird unter Bezugnahme auf die Zeichnungen ein Ausführungsbeispiel der Erfindung näher erläutert.

Es zeigen:
- Figur 1: eine Darstellung eines Flüssigkeits-Analysesystems, einschließlich einer Küvettenverpackung mit Testküvetten und eines RFID-Parameter-Transponders, und eines Analysegeräts mit eingesetzter Testküvette, und
- Figur 2: den RFID-Parameter-Transponder der Figur 1 in schematischer Darstellung.

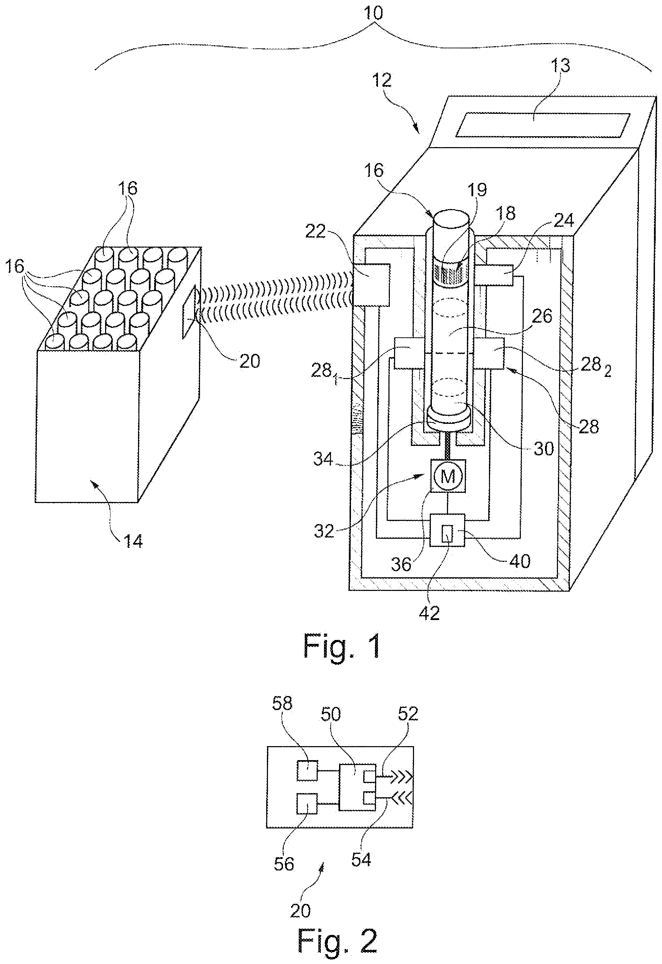

In der Figur 1 ist ein Flüssigkeits-Analysesystem 10 zur fotometrischen Bestimmung eines Analyts in einer Flüssigkeitsprobe dargestellt. Hierbei handelt es sich um ein so genanntes Labor-Analysesystem, wie es typischerweise zur zeitlich punktuellen Bestimmung eines Analyts einer Flüssigkeit eingesetzt wird. Das Analysesystem 10 eignet sich also für eine grobmaschige manuelle Überwachung eines Analyts beziehungsweise zur Qualitätskontrolle, ist jedoch nicht als automatischer Messwertgeber zur Prozesssteuerung geeignet. Das Analysesystem 10 weist ein Analysegerät 12 mit einem Fotometer 28 und eine Küvettenverpackung 14 mit mehreren Testküvetten 16 auf.

Eine Testküvette 16 wird von einem relativ kleinen und im Querschnitt kreisrunden Reagenzglas aus transparentem Glas oder Kunststoff gebildet, in das ein Reagenz 30 eingefüllt ist, das mit dem zu bestimmenden Analyt farbverändernd reagiert. In der Küvettenverpackung 14 sind ausschließlich Testküvetten 16 einer einzigen Charge verpackt. Alle Testküvetten 16 einer einzigen Charge weisen identische Reagenzdaten auf. Die Küvettenverpackung 14 weist einen RFID-Parameter-Transponder 20 auf, der in Figur 2 schematisch und detailliert dargestellt ist.

Der aktive RFID-Parameter-Transponder 20 weist eine Steuereinheit 50, eine Senderantenne 52, eine Empfängerantenne 54, einen Chargenidentifikations-Speicher 56 und einen Parameterspeicher 58 auf. In dem Chargenidentifikations-Speicher 56 ist ein einmaliger und unverwechselbarer Identifikator gespeichert, der mit dem auf den Testküvetten 16 angebrachten chargenspezifischen Identifikatoren 18 identisch ist. In dem Parameterspeicher 58 sind die entsprechenden chargenspezifischen Reagenzdaten, beispielsweise Kalibrierdaten, ein Haltbarkeitsdatum sowie weitere Herstellungs- und Qualitätssicherungsdaten gespeichert.

Die Testküvetten 16 weisen außenseitig als die Chargenidentifikation enthaltenden Identifikator 18 jeweils einen sogenannten zweidimensionalen 2D-Barcode 19 auf.

Das Analysegerät 12 weist eine Anzeige 13 zur Anzeige von Informationen auf, beispielsweise von Bedienungsanweisungen, Fehlermeldungen und insbesondere zur Anzeige des quantitativen Ergebnisses einer Analyt-Bestimmung.

Das Analysegerät 12 wird gesteuert durch eine Steuereinheit 40, die einen Reagenzdaten-Speicher 42 enthält. Das Analysegerät 12 weist ein Fotometer 28 auf, das im Wesentlichen von einem Fotometer-Sender 281 und einem Fotometer-Empfänger 282 gebildet wird.

Das Analysegerät 12 weist eine Identifikator-Lesevorrichtung 24 auf, die als vertikal lesende Linienkamera oder als Flächenkamera ausgebildet ist und den zweidimensionalen Barcode 19 einer eingesetzten Testküvette 16 lesen kann, wenn die Testküvette 16 entsprechend in Position gedreht wird, bzw., im Falle der Linienkamera, auch während des Lesens gedreht wird.

Das Analysegerät 12 weist eine Drehvorrichtung 32 auf, die von einem Drehmotor 36 und einem Drehteller 34 gebildet wird. Auf dem Drehteller 34 steht die in einen vertikalen Küvettenschacht eingesetzte Testküvette 16 auf, die durch die Drehvorrichtung 32 gedreht werden kann. Die Drehvorrichtung 32 dreht die Testküvette 16 sowohl zum Positionieren des Identifikators 18, ggf. während des Lesens des 2D-Barcodes 19 durch die Identifikator-Lesevorrichtung 24 als auch während der Fotometrie der Wasserprobe 26 durch das Fotometer 28.

Ferner weist das Analysegerät 12 eine RFID-Parameter-Lesevorrichtung 22 auf, die mit dem RFID-Parameter-Transponder 20 der Küvettenverpackung 14 derart kommunizieren kann, dass die RFID-Parameter-Lesevorrichtung 22 aus dem Transponder 20 die Chargenidentifikation und die damit assoziierten chargenspezifischen Reagenzdaten auslesen kann. Das Auslesen kann beispielsweise durch eine entsprechende Tasteneingabe des Bedieners an dem Analysegerät 12 ausgelöst werden. Die ausgelesenen Reagenzdaten werden in dem Reagenzdaten-Speicher 42 gespeichert.

Zur Analytbestimmung wird zunächst eine Wasserprobe in eine Testküvette 16 eingefüllt, und wird die Testküvette 16 in das Analysegerät eingesteckt. Vor der eigentlichen Analytbestimmung wird der chargenspezifische Identifikator bzw. die dort gespeicherte Chargenidentifikation der Testküvette 16 durch die Identifikator-Lesevorrichtung 24 eingelesen. Wenn zu dieser Chargenidentifikation bereits Reagenzdaten in dem Reagenzdaten-Speicher 42 gespeichert sind, wird anschließend die fotometrische quantitative Bestimmung des Analyten in der Flüssigkeitsprobe durch das Fotometer 28 und mit Hilfe der chargenspezifischen Reagenzdaten durchgeführt, die in dem Reagenzdaten-Speicher 42 des Analysegeräts 12 gespeichert sind.

Falls die Chargenidentifikation dem Analysegerät 12 nicht bekannt ist, wird der Benutzer vor der Durchführung der Fotometrie aufgefordert, die Reagenzdaten aus dem RFID-Parameter- Transponder 20 der betreffenden Küvettenverpackung 14 auszulesen. Anschließend wird die Fotometrie durchgeführt.

## Patentansprüche

1. Flüssigkeits-Analysesystem (10) zur fotometrischen Bestimmung eines Analyts in einer Flüssigkeitsprobe, mit
einem Analysegerät (12) mit einem Fotometer (28), einer RFID-Parameter- Lesevorrichtung (22), einer Identifikator-Lesevorrichtung (24) und einer Steuereinheit (40), die einen Reagenzdaten-Speicher (42) enthält,
einer Küvettenverpackung (14) mit einem RFID- Parameter-Transponder (20), wobei in dem RFID- Parameter- Transponder (20) eine Chargenidentifikation und chargenspezifische Reagenzdaten gespeichert sind,
mehreren jeweils dasselbe Reagenz (30) enthaltenden Testküvetten (16) einer Charge mit identischen Reagenzdaten in der Küvettenverpackung (14),
wobei jede Testküvette (16) einen chargenspezifischen Identifikator (18) mit einer Chargenidentifikation aufweist, der von der Identifikator- Lesevorrichtung (24) gelesen werden kann, und
wobei die Identifikator- Lesevorrichtung (24) eine von der RFID-Parameter-Lesevorrichtung (22) separat ausgebildete Lesevorrichtung ist.

2. Flüssigkeits-Analysesystem (10) nach Anspruch 1, wobei der Identifikator (18) an den Testküvetten (16) als Identifikator-Barcode (19) und die Identifikator- Lesevorrichtung (24) als optische Barcode-Lesevorrichtung ausgebildet ist.

3. Flüssigkeits-Analysesystem (10) nach Anspruch 2, wobei der Testküvetten - Barcode (19) ein 2D-Barcode und die Barcode-Lesevorrichtung (24) eine 2D-Barcode-Lesevorrichtung ist.

4. Flüssigkeits-Analysesystem (10) nach einem der Ansprüche 2 oder 3, wobei der Identifikator-Barcode (18) auf der Testküvette (16) außen angebracht und die Barcode-Lesevorrichtung (24) derart in dem Analysegerät (12) angeordnet ist, dass der Identifikator-Barcode (18) bei in das Analysegerät (12) eingesetzter Testküvette (16) gelesen werden kann.

5. Flüssigkeits-Analysesystem (10) nach einem der vorangegangenen Ansprüche, wobei das Analysegerät (12) eine Testküvetten-Drehvorrichtung (32) zum Drehen der eingesetzten Testküvette (16) um ihre Längsachse aufweist,

6. Verfahren zum Betrieb eines Analysegerät (12) eines Flüssigkeits-Analysesystem (10) zur fotometrischen Bestimmung eines Analyts in einer Flüssigkeitsprobe, mit
einem Analysegerät (12) mit einem Fotometer (28), einer RFID-Parameter-Lesevorrichtung (22), einer Identifikator-Lesevorrichtung (24) und einer Steuereinheit (40), die einen Reagenzdaten-Speicher (42) enthält,
einer Küvettenverpackung (14) mit einem RFID-Parameter-Transponder (20), wobei in dem RFID-Parameter-Transponder (20) eine Chargenidenetifikation und chargenspezifische Reagenzdaten gespeichert sind, und
mehreren jeweils dasselbe Reagenz (30) enthaltenden Testküvetten (16) einer Charge mit identischen Reagenzdaten in der Küvettenverpackung (14), wobei jede Testküvette (16) einen chargenspezifischen Identifikator (18) mit einer Chargenidentifikation aufweist, der von der Identifikator-Lesevorrichtung (24) gelesen werden kann, und
wobei die Identifikator-Lesevorrichtung (24) eine von der RFID-Parameter-Lesevorrichtung (22) separat ausgebildete Lesevorrichtung ist,
mit den Verfahrensschritten:
bei Vorliegen eines Auslesebefehls: Auslesen der Chargenidentifikation und der chargenspezifischen Reagenzdaten aus dem RFID-Parameter-Transponder (20), und Speicherung dieser Daten in dem Reagenzdaten-Speicher (42),
vor jeder Analytbestimmung: Auslesen des chargenspezifischen Identifikators der Testküvette (16) mit der Identifikator-Lesevorrichtung (24),
quantitative fotometrische Bestimmung des Analyten in der Flüssigkeitsprobe der Testküvette (16) mit Hilfe der dem Identifikator zugeordneten Reagenzdaten.

7. Verfahren nach Anspruch 6, wobei das Flüssigkeits-Analysesystem (10) die Merkmale einer der Ansprüche 2-5 aufweist.

8. Analysegerät (12) für das Flüssigkeits-Analysesystem (10) gemäß einem der Ansprüche 1-5, mit den sich auf das Analysegerät (12) beziehemden Merkmalen einer der Ansprüche 1-5 und zum Betrieb gemäß dem Verfahren nach Anspruch 6.

9. Küvettenverpackung (14) mit Testküvetten (16) für das Flüssigkeits-Analysesystem (10) gemäß einem der Ansprüche 1-5, mit den Merkmalen einer der Ansprüche 1-5 zum Betrieb gemäß dem Verfahren nach Patentanspruch 6.

## Claims

1. A liquid analysis system (10) for the photometric determination of an analyte in a liquid sample, comprising
an analyzer (12) comprising a photometer (28), a RFID parameter reading device (22), an identifier reading device (24) and a control unit (40) comprising a reagent data memory (42),
a cuvette package (14) with a RFID parameter transponder (20), wherein a batch identification and batch-specific reagent data are stored in the RFID parameter transponder (20),
a plurality of test cuvettes (16) of one batch with identical reagent data in the cuvette package (14), the cuvettes each containing the same reagent,
wherein each test cuvette (16) comprises a batch-specific identifier (18) including a batch identification, which identifier can be read by the identifier reading device (24), and
wherein the identifier reading device (24) is a reading device formed separately from the RFID parameter reading device (22).

2. The liquid analysis system (10) of claim 1, wherein the identifier (18) is formed on the test cuvettes (16) as an identifier bar code (19) and the identifier reading device (24) is designed as an optical bar code reading device.

3. The liquid analysis system (10) of claim 2, wherein the test cuvette bar code (19) is a 2D bar code and the bar code reading device (24) is a 2D bar code reading device.

4. The liquid analysis system (10) of one of claims 2 or 3, wherein the identifier bar code (18) is provided on the outer side of the test cuvette (16) and the bar code reading device (24) is arranged such in the analyzer (12) that the identifier bar code (18) can be read when the test cuvette (16) is in place in the analyzer (12).

5. The liquid analysis system (10) of one of the preceding claims, wherein the analyzer (12) comprises a test cuvette turning device (32) for turning an inserted test cuvette (16) around its longitudinal axis.

6. Method for operating an analyzer of a liquid analysis system (10) for the photometric determination of an analyte in a liquid sample, comprising
an analyzer (12) comprising a photometer (28), a RFID parameter reading device (22), an identifier reading device (24) and a control unit (40) comprising a reagent data memory (42),
a cuvette package (14) with a RFID parameter transponder (20), wherein a batch identification and batch-specific reagent data are stored in the RFID parameter transponder (20),
a plurality of test cuvettes (16) of one batch with identical reagent data in the cuvette package (14), the cuvettes each containing the same reagent,
wherein each test cuvette (16) comprises a batch-specific identifier (18) including a batch identification, which identifier can be read by the identifier reading device (24), and
wherein the identifier reading device (24) is a reading device formed separately from the RFID parameter reading device (22),
comprising the following method steps:
if a read-out instruction is present: reading the batch identification and the batch-specific reagent data from the RFID parameter transponder (20) and storing these data in a reagent data memory (42),
prior to each determination of an analyte: reading the batch-specific identifier of the test cuvette (16) by means of the identifier reading device (24), and
performing a quantitative photometric determination of the analyte in the liquid sample of the test cuvette (16) using the reagent data associated to the identifier.

7. Method of claim 6, in which the liquid analysis system (10) has the features of one of claims 2-5.

8. An analyzer (12) for the liquid analysis system (10) of one of claims 1-5, comprising the features relating to the analyzer (12) of one of claims 1-5 and for the operation according to the method of claim 6.

9. A cuvette package (14) including test cuvettes (16) for the liquid analysis system (10) of one of claims 1-5, comprising the features of one of claims 1-5 for the operation according to the method of claim 6.

## Revendications

1. Système d'analyse de liquides (10) pour la détermination photométrique d'un analyte dans un échantillon de liquide, comprenant
un analyseur (12) comportant un photomètre (28), un dispositif de lecture de paramètre RFID (22), un dispositif de lecture d'identifiant (24) et une unité de commande (40) comportant un mémoire de données de réactif (42),
un emballage de cuvettes (14) comportant un transpondeur de paramètre RFID (20), une identification de lot et des données de réactif spécifiques à un lot étant stockées dans le transpondeur de paramètre RFID (20),
plusieurs cuvettes de test (16) contenant le même réactif (30) d'un lot avec des données de réactif identiques dans l'emballage de cuvettes (14),
chaque cuvette de test (16) présentant un identifiant (18) spécifique au lot avec une identification de lot, qui peut être lue par le dispositif de lecture d'identifiant (24), et
le dispositif de lecture d'identifiant (24) étant un dispositif de lecture formé séparément du dispositif de lecture de paramètre RFID (22).

2. Système d'analyse de liquides (10) selon la revendication 1, dans lequel l'identifiant (18) est formé sur les cuvettes de test (16) sous forme d'un code à barres de l'identifiant (19) et le dispositif de lecture d'identifiant (24) est conçu comme dispositif de lecture de code à barres optique.

3. Système d'analyse de liquides (10) selon la revendication 2, dans lequel le code à barres de la cuve de test (19) est un code à barres 2D et le lecteur de code à barres (24) est un lecteur de code à barres 2D.

4. Système d'analyse de liquides (10) selon l'une quelconque des revendications 2 ou 3, dans lequel le code à barres de l'identifiant (19) est appliqué extérieurement sur la cuvette de test (16) et le lecteur de code à barres (24) est disposé dans le dispositif d'analyse (12) de sorte que le code à barres de l'identifiant (19) peut être lu lorsque la cuvette de test (16) est insérée dans l'analyseur (12).

5. Système d'analyse de liquides (10) selon l'une quelconque des revendications précédentes, dans lequel l'analyseur (12) comprend un dispositif de rotation de cuvette de test (32) pour faire tourner la cuvette de test (16) insérée autour de son axe longitudinal.

6. Procédé pour le fonctionnement d'un analyseur (12) d'un système d'analyse de liquides (10) pour la détermination photométrique d'un analyte dans un échantillon de liquide, comprenant
un analyseur (12) comportant un photomètre (28), un dispositif de lecture de paramètre RFID (22), un dispositif de lecture d'identifiant (24) et une unité de commande (40) comportant un mémoire de données de réactif (42),
un emballage de cuvettes (14) comportant un transpondeur de paramètre RFID (20), une identification de lot et des données de réactif spécifiques à un lot étant stockées dans le transpondeur de paramètre RFID (20),
plusieurs cuvettes de test (16) contenant le même réactif (30) d'un lot avec des données de réactif identiques dans l'emballage de cuvettes (14), chaque cuvette de test (16) présentant un identifiant (18) spécifique au lot avec une identification de lot, qui peut être lue par le dispositif de lecture d'identifiant (24), et
le dispositif de lecture d'identifiant (24) étant un dispositif de lecture formé séparément du dispositif de lecture de paramètre RFID (22),
le procédé comprenant les étapes suivantes:
en présence d'une commande de lecture: lire les données d'identification de lot et les données de réactif spécifiques à un lot dans le transpondeur de paramètre RFID (20), et stocker ces données dans une mémoire de données de réactif (42),
avant chaque détermination d'un analyte: lire l'identifiant spécifique de lot de la cuvette de test (16) par le dispositif de lecture d'identifiant (24),
détermination photométrique quantitative de l'analyte dans l'échantillon liquide de la cuvette de test (16) à l'aide des données de réactif associées à l'identifiant.

7. Procédé selon la revendication 6, dans lequel le système d'analyse de liquides (10) comporte les caractéristiques de l'un des revendications 2-5.

8. Analyseur (12) pour le système d'analyse de liquides (10) selon l'une quelconque des revendications 1 à 5, présentant les caractéristiques de l'une des revendications 1 à 6 relatives à l'analyseur (12) et pour le fonctionnement selon le procédé selon la revendication 6.

9. Emballage de cuvettes (14) comprenant des cuvettes de test (16) pour le système d'analyse de liquides (10) selon l'une quelconque des revendications 1 à 5, avec les caractéristiques selon l'une quelconque des revendications 1 à 5 pour le fonctionnement selon le procédé de la revendication 6.
